# EUROPÄISCHE PATENTSCHRIFT

(11) **EP 2 141 396 B1**
(45) Veröffentlichungstag und Bekanntmachung des Hinweises auf die Patenterteilung: **12.09.2012**
(21) Anmeldenummer: 08011853.2
(22) Anmeldetag: 01.07.2008
(51) Int. Cl.: F16K 31/50, F16K 1/04, F16K 31/04

(54) **Vorrichtung zur Steuerung eines Heiz-oder Kühlkörpers und Heizkörper**
Device for controlling a heating or cooling unit and heating unit
Dispositif de commande d'un corps de refroidissement ou de chauffage et radiateur

(43) Veröffentlichungstag der Anmeldung: 06.01.2010
(73) Patentinhaber: König, Christel, 63674 Altenstadt-Heegheim (DE)
(72) Erfinder: König, Christel, 63674 Altenstadt-Heegheim (DE)
(74) Vertreter: Wunderlich, Rainer

(56) Entgegenhaltungen:
- EP-A- 0 939 245
- WO-A-03/010454
- CH-A- 291 888
- DE-U1- 29 616 690
- JP-A- 59 103 092
- NL-A- 7 606 489
- US-A- 3 334 654

## Beschreibung

Die Erfindung betrifft eine Vorrichtung zur Steuerung eines Heiz- oder Kühlkörpers mit einem Ventil, welches einen axial verstellbaren Ventilstößel zum Öffnen und/oder Schließen des Ventils aufweist, und mit einer Steuer- und Antriebseinrichtung, welche einen Elektromotor mit einer Antriebswelle zum axialen Verstellen des Ventilstößels aufweist.

Zum Verstellen eines Ventilstößels wird bei bekannten Vorrichtungen eine axiale Kraft auf ein Ende des Ventilstößels aufgebracht. Durch die axiale Verstellung des Ventilstößels wird eine Ventilöffnung eines Heiz- oder Kühlkörperventils gesteuert. Um bei Rücknahme der axialen Kraft eine entgegengesetzte Bewegung des Ventilstößels hervorzurufen, ist der Ventilstößel federbelastet.

Eine Ventilvorrichtung, beispielsweise für Heizungsanlagen, mit einem eine Hubbewegung ausführenden Ventilstößel und einem elektromotorischen Stellantrieb ist aus der DE 76 04 336 bekannt. Zur Umwandlung der Drehbewegung des Motors in die Hubbewegung des Ventilstößels ist zwischen Motorantriebswelle und Ventilstößel ein die Drehbewegung in eine Hubbewegung umwandelndes Getriebe angeordnet.

Eine Regeleinrichtung für ein Thermostatventil ist aus der DE 35 09 353 C1 bekannt. Die Regeleinrichtung ist mit einem Druckstück versehen, welches an der Stirnseite eines federbelasteten Fühlerstifts anliegt und in Abhängigkeit von einer Differenz zwischen einem Temperatursollwert und einem Istwert verstellt wird. Der Antrieb des Druckstücks erfolgt über einen Motor mit einem Getriebe. Der Fühlerstift ist mit einem Ventilteller zum Öffnen und Schließen des Ventils versehen.

Bei diesen bekannten Ventilen besteht der Nachteil, dass aufgrund der an dem Ventilstößel angeordneten Druckfeder mit einer großen Federkonstante eine große Druckkraft zur Verstellung des Ventilstößels erforderlich ist, zu dessen Überwindung ein Elektromotor mit einer hohen Leistung benötigt wird. Um die aufzuwendende Kraft zu reduzieren, schlägt die DE 39 05 414 C1 daher vor, eine der Druckfeder entgegenwirkende zweite Feder anzuordnen.

Die DE 100 26 291 A1 offenbart einen elektromotorischen Stellantrieb für Heiz-und/oder Kühlkörperventile mit einem Gehäuse und einem innerhalb des Gehäuses angeordneten Elektromotor, der über ein mehrstufiges Untersetzungsgetriebe ein Stellglied zur Betätigung des Heiz- und/oder Kühlkörperventils antreibt.

JP 59-103092 beschreibt ein Ventil mit einem angetriebenen Ventilschaft, wobei der Ventilschaft ein Gewinde umfasst und mittels eines Motors angetrieben werden kann.

NL 7606489 beschreibt eine Überlastungssicherungsvorrichtung zum Schutz gegenüber der Ausübung eines übermäßigen Drehmoments für ein kraftbetriebenes Ventil. Das Ventil umfasst einen Ventilschaft mit einem Gewinde zum axialen Verstellen des Ventilschaftes zum Öffnen oder Schließen des Ventils.

Aus der DE 2986 16 690 U1 ist ein Antrieb für ein Ventil mit einem Motor, einem Getriebe und einem Stellteil bekannt, wobei das Getriebe als Planetenwälzgetriebespindel ausgebildet ist, so dass eine Drehbewegung einer Welle des Motors in eine Axialbewegung des Stellteils umgesetzt werden kann.

Als eine **Aufgabe** der Erfindung kann angesehen werden, eine Vorrichtung zur Steuerung eines Heizkörpers zu schaffen, welche kompakt aufgebaut ist und geringe Stellkräfte zur Betätigung des Ventils aufweist. Eine weitere Aufgabe besteht darin, einen kompakten Heizkörper zu schaffen.

Die Aufgabe wird erfindungsgemäß durch eine Vorrichtung mit den Merkmalen des Anspruchs 1 gelöst. Die Aufgabe wird ferner durch einen Heizkörper gemäß Anspruch 13 gelöst. Bevorzugte Ausgestaltungen der Erfindung sind in den jeweiligen abhängigen Ansprüchen angegeben.

Bei der Vorrichtung zur Steuerung eines Heiz- oder Kühlkörpers ist vorgesehen, dass der Ventilstößel eine Gewindespindel umfasst, welche axial verstellbar in dem Ventil gelagert und von dem Elektromotor drehend antreibbar ist.

Durch den erfindungsgemäßen Ventilstößel wird die erforderliche Stellkraft zum Verstellen des Ventilstößels deutlich reduziert. Der Motor zum Betätigen des Ventilstößels kann daher leistungsschwächer ausgeführt werden, wodurch die Abmessungen der Vorrichtung insgesamt reduziert werden können.

Ein Grundgedanke der Erfindung kann darin gesehen werden, den Ventilstößel zum Öffnen und/oder Schließen des Ventils zu drehen und durch die Drehbewegung eine axiale Verstellung des Ventilstößels zu bewirken. Im Gegensatz zu einer Linearbewegung eines federgespannten Ventilstößels ist nur ein geringes Drehmoment erforderlich. Die zur Aufbringung des Drehmoments erforderliche Kraft ist wesentlich geringer als die im Stand der Technik erforderliche Kraft und kann mit einem kleineren Antrieb realisiert werden. Vorzugsweise ist zum Bilden der Gewindespindel der Ventilstößel an seinem Ventilschaft mit einem Außengewinde versehen, welches mit einem ortsfesten, korrespondierenden Innengewinde zusammenwirkt. Die gesamte Vorrichtung kann somit in einer kleineren Bauweise ausgeführt werden, wodurch ästhetische Anforderungen an die Heizkörper erfüllt werden können.

Die erfindungsgemäße Vorrichtung eignet sich insbesondere zur Verwendung in Verbindung mit Flachheizkörpern und Design-Heizkörpern, aber auch für Radiatoren und Fußbodenheizungen. Unter einem Ventil kann insbesondere auch ein Ventileinsatz verstanden werden, welcher in ein Ventilgehäuse, welches einen Ventilsitz aufweisen kann, einsetzbar ist. Zur Nachrüstung eines Heizkörpers ist es dann lediglich erforderlich, den Ventileinsatz, welcher den Ventilstößel umfasst, auszutauschen und das Ventil mit der erfindungsgemäßen Steuer- und Antriebseinrichtung zu versehen.

Eine bevorzugte Ausführungsform der Erfindung besteht darin, dass eine Getriebeeinrichtung und ein Stellglied, welches mit dem Ventilstößel drehfest verbindbar ist, vorgesehen ist. Die Getriebeeinrichtung ist vorzugsweise als Untersetzungsgetriebe ausgeführt, um eine hohe Motordrehzahl an eine gewünschte Drehzahl des Ventilstößels herabzusetzen und das Drehmoment zu erhöhen.

Das Stellglied ist in einer bevorzugten Ausführungsform als Welle oder als Zahnrad ausgebildet. Bei einer Ausführung als Welle sind Stellglied und Ventilstößel vorzugsweise koaxial zueinander ausgerichtet und lösbar, drehfest miteinander verbunden. Hierzu kann zwischen Stellglied und Ventilstößel eine Kupplung vorgesehen sein. Besonders bevorzugt ist es, dass eine formschlüssige Verbindung vorgesehen ist. Beispielsweise kann das Stellglied oder der Ventilstößel ein Nabenelement aufweisen, so dass Stellglied und Ventilstößel über eine formschlüssige Welle-Nabe-Verbindung koppelbar sind.

Bei einer Ausführung des Stellglieds als Zahnrad ist es bevorzugt, dass dieses mit dem Ventilstößel formschlüssig, drehfest verbindbar ist. Dieses könnte beispielsweise dadurch erfolgen, dass an dem Ventilstößel ein Zahnelement vorgesehen ist, welches mit dem als Zahnrad ausgebildeten Stellglied in Eingriff gebracht werden kann.

Eine besonders einfache konstruktive Gestaltung ergibt sich dadurch, dass das Stellglied axial verschiebefest in der Steuer- und Antriebseinrichtung gelagert ist und dass eine Kupplungseinrichtung zum drehfesten Koppeln des Ventilstößels und des Stellglieds angeordnet ist. Die Kupplungseinrichtung ist vorzugsweise so gestaltet, dass der durch die axiale Verschiebung des Ventilstößels veränderliche Abstand zwischen Ventilstößel und Stellglied durch die Kupplungseinrichtung derart ausgeglichen wird, dass eine drehfeste Verbindung stets gegeben ist.

Eine besonders kompakte Vorrichtung lässt sich dadurch erreichen, dass eine Längsachse des Stellglieds und/oder des Ventilstößels einen Winkelversatz gegenüber einer Längsachse der Antriebswelle des Motors aufweist. Durch diese Ausführungsform lässt sich die Bautiefe der Steuer- und Antriebseinrichtung deutlich reduzieren.

Besonders bevorzugt ist es, dass der Winkelversatz etwa 90° beträgt. Der Motor ist also gegenüber dem Stellglied und/oder dem Ventilstößel um etwa 90° gedreht. Die Tiefe der Vorrichtung kann dadurch weiter reduziert werden.

Zur Übertragung der Motorleistung auf den Ventilstößel ist es bevorzugt, dass die Getriebeeinrichtung ein Zahnradgetriebe mit mehreren Getriebestufen und/oder mindestens eine Kegelradgetriebestufe und/oder eine mindestens eine Stirnradgetriebestufe aufweist. Durch ein Zahnradgetriebe kann auf günstige Weise eine Herabsetzung der Drehzahl des Motors bewirkt werden. Eine Kegelradgetriebestufe ist insbesondere bei einem gegenüber dem Stellglied und/oder dem Ventilstößel gekippten Motor vorgesehen.

Besonders bevorzugt ist es, dass in der Steuer- und Antriebseinrichtung ein Energiespeicher zum Betreiben des Elektromotors angeordnet ist. Durch den Energiespeicher, insbesondere eine Batterie, kann die Steuer- und Antriebseinrichtung unabhängig von einer Netzstromversorgung betrieben werden. Die Stromversorgung kann zusätzlich oder alternativ über einen Leitungsanschluss oder über eine Solarzelle an der Gehäuseaußenseite erfolgen.

Die erfindungsgemäße Vorrichtung wird zur Regelung einer Temperatur eingesetzt. Hierzu ist vorgesehen, dass zum Bilden eines Regelkreises eine Regeleinrichtung mit einem Temperatursensor vorgesehen ist, welche mit dem Elektromotor wirkmäßig verbunden ist. Hierzu ist insbesondere der Einsatz eines Mikroprozessors vorgesehen. Die vom Temperatursensor gelieferte Information über die Umgebungstemperatur wird mit einer einstellbaren Solltemperatur verglichen. Die Differenz zwischen tatsächlicher Temperatur und Solltemperatur dient als Stellgröße für das Ventil bzw. den Elektromotor. Die Vorrichtung erlaubt so eine präzise Regelung der Temperatur. Besonders bevorzugt ist eine Regeleinrichtung, welche eine kontinuierliche Regelbarkeit der Temperatur, insbesondere mit einer geringen dauerhaften Regelabweichung ermöglicht. Es kann auch eine Steuerung von einer Zentraleinheit, etwa einen Computer, nach einem vorgegebenen Programm erfolgen.

Besonders bevorzugt ist es, wenn der Temperatursensor beabstandet von der Steuer-und Antriebseinrichtung angeordnet und vorzugsweise drahtlos mit der Steuer- und Antriebseinrichtung verbunden ist. Hierdurch wird eine Verfälschung der Temperaturmessung durch eine unmittelbare Nähe zu dem Heizkörper verhindert. Eine solche Beabstandung ist insbesondere vorteilhaft, wenn die Steuer- und Antriebseinrichtung in dem Heizkörper integriert ist. Die Übertragung des Messwerts kann drahtgebunden oder über Funk oder Infrarotstrahlung erfolgen.

Eine weitere Ausgestaltung der Erfindung ist dadurch gegeben, dass der Temperatursensor als Transponder ausgebildet ist. Diese Ausführung hat den Vorteil, dass der Temperatursensor ohne eigene Energieversorgung betrieben werden kann und seine Energie lediglich drahtlos über ein Signal, beispielsweise von der Steuer- und Antriebseinrichtung, erhält.

Weiterhin ist es vorteilhaft, wenn das Ventil zum Befestigen der Steuer- und Antriebseinrichtung mindestens ein Sackloch aufweist, welches parallel zu einer Axialrichtung des Ventilstößels ausgerichtet ist. Durch eine Befestigung der Steuer- und Antriebseinrichtung über Frontlöcher an dem Ventil kann ein wirksamer Diebstahlschutz erreicht werden. Im Gegensatz zu der im Stand der Technik bekannten Befestigung eines Ventilkopfes mittels Überwurfmutter am Ventil erfordert das Lösen der Steuer-und Antriebseinrichtung ein Öffnen der Einrichtung, um die Befestigungsmittel, beispielsweise Schrauben, zu betätigen. Vorzugsweise ist ein Schnellverschluss vorgesehen, mit welchem die Steuer- und Antriebseinrichtung an dem Ventil befestigt werden kann.

Eine verbesserte Reinigung des Ventils kann dadurch erzielt werden, dass über eine Programmierung ein Spüldurchgang des Ventils durchführbar ist, bei welchem das Ventil mittels des Elektromotors für eine vorbestimmte Zeit in einen weit geöffneten Zustand bringbar ist. Bei Installationsarbeiten kommt es häufig vor, dass sich Schmutz innerhalb einer Leitung und im Heizkörper ansammelt. Durch den programmierbaren Spüldurchgang können solche Ablagerungen einfach entfernt werden. Hierzu wird das Ventil mit einer großen Öffnung aufgefahren und, nachdem der Schmutz beseitigt ist, wieder bis zu einem vorbestimmten Öffnungsgrad geschlossen, um in einen regulären Heiz- oder Kühlbetrieb zurückzukehren. Ein Spüldurchgang kann zur Inbetriebnahme der Anlage, gegebenenfalls mehrfach, programmiert werden und danach im regulären Heizbetrieb, beispielsweise monatlich, durchgeführt werden.

Eine besonders einfache Anpassung der Vorrichtung, insbesondere des Ventils, an die hydraulischen Gegebenheiten einer Heizungsanlage kann dadurch erreicht werden, dass ein Nenndurchmesser und/oder ein Nennöffnungsgrad des Ventils ferngesteuert einstellbar ist. Bei Ventilen im Stand der Technik besteht der Nachteil, dass ein Nenndurchfluss des Heizmediums durch Einstellung eines Nennöffnungsgrades des Ventils manuell eingestellt werden muss (sogenannte Kv-Öffnung). Dieses erfolgt üblicherweise entweder vor der Montage des Thermostatkopfes in einem Heizplattenwerk oder bei Montage des Ventils an dem Heizkörper. Mit der erfindungsgemäßen Vorrichtung kann ein spezifischer Durchflusswert auch nach Installation des Heizkörpers bestimmt und, beispielsweise mittels Fernbedienung per Infrarot oder Funk, verstellt werden. Hierdurch wird die Arbeit eines Planers für den spezifischen Durchflusswert deutlich erleichtert.

Eine besonders gute Regelbarkeit der Temperatur lässt sich dadurch erzielen, dass eine Ventilöffnungsgeschwindigkeit einstellbar ist. Wird die erfindungsgemäße Vorrichtung in Verbindung mit einem Temperaturregler betrieben, so strebt dieser eine Minimierung der Differenz zwischen einer Ist- und einer Solltemperatur an. Gemäß dieser bevorzugten Ausführungsform wird diese Minimierung mit einer Beschränkung der Geschwindigkeit, mit der das Ventil öffnet, verbunden, so dass eine Zeitkonstante der Ventilöffnung bzw. -schließung nach einer typischen Zeitkonstante für Wohnumgebungen optimiert werden kann.

Ein Grundgedanke dieser Ausführungsform besteht darin, die Geschwindigkeit, mit der das Ventil öffnet, zu beschränken, um Schwankungen der Temperatur bei der Regelung zu minimieren.

Ferner können die nicht unerheblichen Nachteile, die sich durch eine Voreinstellung ergeben, beseitigt werden. Hierzu zählen beispielsweise die aufwändige anfängliche Einstellung und periodische Wartung, die aufgrund von Verengungen der Leitung und einer Reduzierung eines Durchflussquerschnitts durch Verschmutzungen oder Ablagerungen erforderlich sind. Aufgrund einer mit der vorgesehenen Regeleinrichtung erzielbaren Selbsteichungsfähigkeit der Anlage konfiguriert sich diese quasi selbstständig neu, falls sich die Einsatzbedingungen ändern, beispielsweise durch Entfernung oder Verschließen eines Heizkörpers der Anlage.

Der erfindungsgemäße Heizkörper ist dadurch gekennzeichnet, dass eine Vorrichtung nach einem der Ansprüche 1 bis 11 angeordnet ist. Die gesamten Abmessungen des Heizkörpers einschließlich der Vorrichtung können reduziert werden. Ferner ergeben sich die im Zusammenhang mit der Vorrichtung diskutierten Vorteile. Der erfindungsgemäße Heizkörper ist vorzugsweise als Flachheizkörper ausgebildet.

Eine bevorzugte Ausgestaltung des Heizkörpers ist dadurch gegeben, dass die Vorrichtung zumindest teilweise in eine äußere Begrenzung des vorzugsweise als Flachheizkörper ausgebildeten Heizkörpers integriert ist. Hierdurch können die äußeren Abmessungen des Heizkörpers weiter reduziert und gestalterische Vorteile erzielt werden. Besonders bevorzugt ist es, die Vorrichtung vollständig in die äußere Begrenzung des Heizkörpers zu integrieren. Eine Möglichkeit hierzu besteht darin, die Vorrichtung hinter einer Seitenverkleidung des Heizkörpers anzuordnen. Hierdurch kann neben einer optischen Verschönerung des Heizkörpers ein wirksamer Diebstahlschutz erzielt werden. Vorzugsweise ist die Seitenverkleidung des Heizkörpers mit einem Bedienfeld versehen, welches mit der Steuer- und Antriebseinrichtung verbunden werden kann. Das Bedienfeld kann mehrere Bedienelementen, wie beispielsweise Bedienknöpfen oder einem Display, aufweisen. Im Fall der Anordnung der Vorrichtung hinter der Seitenverkleidung kann auf eine Verkleidung der Vorrichtung selbst grundsätzlich verzichtet werden.

Die Erfindung wird nachfolgend anhand der beigefügten schematischen Zeichnungen weiter erläutert. In den Zeichnungen zeigt:
- Fig. 1: eine erste Ausführungsform der erfindungsgemäßen Vorrichtung, welche an einem Heizkörper angebracht ist;
- Fig. 2: eine vereinfachte Darstellung einer erfindungsgemäßen Vorrichtung;
- Fig. 3a: einen erfindungsgemäßen Ventilstößel;
- Fig. 3b: eine vergrößerte Ansicht eines Abschnitts des Ventilstößels gemäß Fig. 3a;
- Fig. 4: eine zweite Ausführungsform der erfindungsgemäßen Vorrichtung, welche an einem Heizkörper angebracht ist;
- Fig. 5: eine erste Ausführungsform eines Ventileinsatzes;
- Fig. 6: eine zweite Ausführungsform eines Ventileinsatzes;
- Fig. 7: eine dritte Ausführungsform eines Ventileinsatzes;
- Fig. 8: eine vierte Ausführungsform eines Ventileinsatzes;
- Fig. 9: eine fünfte Ausführungsform eines Ventileinsatzes; und
- Fig. 10: eine sechste Ausführungsform eines erfindungsgemäßen Ventileinsatzes.

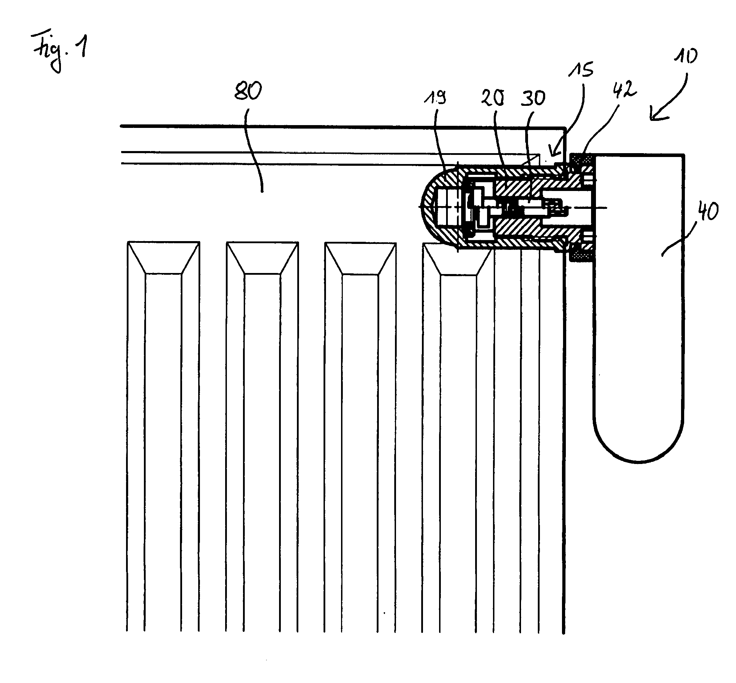

Fig. 1 zeigt eine teilweise geschnittene Ansicht einer Vorrichtung 10 zur Steuerung eines Heizkörpers 80. Die Vorrichtung 10 weist ein Ventil 15 und eine Steuer- und Antriebseinrichtung 40 auf, welche mit dem Ventil 15 lösbar verbunden ist. Das Ventil 15 weist ein Ventilgehäuse 19 auf, das in den als Plattenheizkörper ausgebildeten Heizkörper 80 integriert ist. Alternativ kann das Ventil 15 in einem T-Anschluss vorgesehen sein, der zwischen zwei Platten eines Plattenheizkörpers angeordnet ist. In das Ventilgehäuse 19 ist ein Ventileinsatz 20 eingesetzt. Der Ventileinsatz 20 ist mittels einer Schraubverbindung mit dem Ventilgehäuse 19 verbunden. Hierzu weist der Ventileinsatz 20 ein Außengewinde 21 und das Ventilgehäuse 19 ein entsprechendes Innengewinde auf. Die Befestigung der Steuer- und Antriebseinrichtung 40 an dem Ventil 15 ist in der dargestellten Ausführungsform mittels eines Schnappverschlusses 42 realisiert. Zusätzlich oder alternativ kann eine Verschraubung der Steuer- und Antriebseinrichtung 40 an dem Ventil 15 vorgesehen sein. In dem Ventileinsatz 20 ist ein Ventilstößel 30 mit einem Ventilkörper 39 zum Verschließen einer Ventilöffnung angeordnet.

Die Steuer- und Antriebseinrichtung 40 weist vorzugsweise an einer Außenseite Bedienelemente und ein Display auf. Durch die Bedienelemente und das Display können Einstellungen des Ventils, beispielsweise eine zeitliche Programmierung, vorgenommen werden.

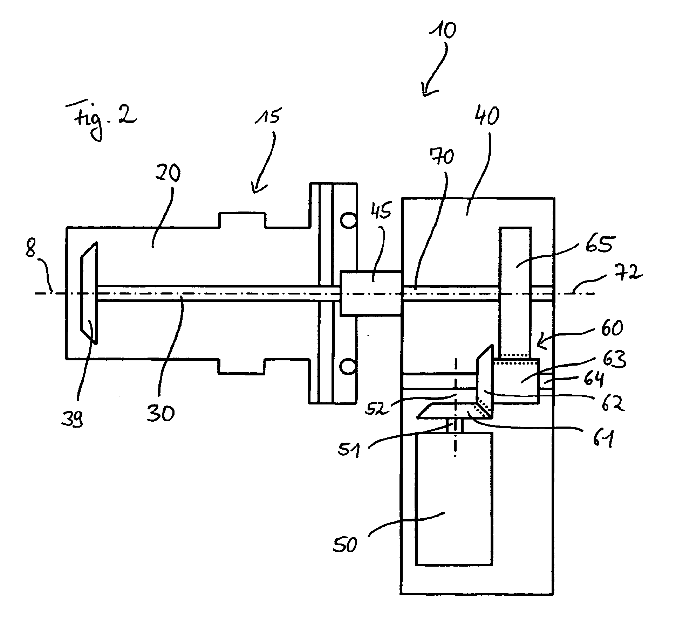

Fig. 2 zeigt in stark vereinfachter Form eine Schnittansicht eines Ventileinsatzes 20 und einer Steuer- und Antriebseinrichtung 40. Die Steuer- und Antriebseinrichtung 40 ist in einem Gehäuse untergebracht, welches einen Elektromotor 50, eine Getriebeeinrichtung 60 und ein Stellglied 70 umschließt. Aus dem Elektromotor 50 ist eine Antriebswelle 51 herausgeführt, dessen Längsachse 52 senkrecht sowohl zu dem Ventilstößel 30 als auch zu dem Stellglied 70 beziehungsweise deren gemeinsamen Längsachsen 8 und 72 verläuft. Auf der Antriebswelle 51 befindet sich ein erstes Zahnrad 61, welches als Kegelrad ausgebildet ist. Eine erste Getriebewelle 64 trägt ein zweites Zahnrad 62, welches ebenfalls als Kegelrad ausgebildet ist und mit dem ersten Zahnrad 61 formschlüssig in Eingriff steht. Grundsätzlich ist es aber auch möglich, dass ein erstes Zahnrad der Getriebeeinrichtung mit einer Schnecke in Eingriff steht. Ferner ist auf der ersten Getriebewelle 64 ein als Stirnrad ausgebildetes drittes Zahnrad 63 befestigt, welches mit einem vierten Zahnrad 65 in Eingriff steht. Das vierte Zahnrad 65 ist auf dem als Welle ausgebildeten Stellglied 70 montiert. Erstes Zahnrad 61 und zweites Zahnrad 62 bilden eine erste Getriebestufe, welche als Kegelradgetriebestufe ausgebildet ist. Drehmoment und Drehzahl werden durch die erste Getriebestufe nicht verändert. Durch das dritte Zahnrad 63 und das vierte Zahnrad 65 wird eine zweite Getriebestufe gebildet, welche als Stirnradgetriebestufe ausgebildet ist und als Untersetzungsgetriebe wirkt. Dabei wird die Drehzahl reduziert. Eine Breite des dritten Zahnrads 63 ist größer als eine Breite des vierten Zahnrads 65.

Die Übertragung des Drehmoments von dem Stellglied 70 auf den Ventilstößel 30 erfolgt mittels einer Kupplungseinrichtung 45, welche zwischen dem Stellglied 70 und dem Ventilstößel 30 angeordnet ist. Das drehbare Stellglied 70 kann über eine Öffnung aus dem Gehäuse ragen oder die Kupplungseinrichtung 45 ragt in das Gehäuse hinein.

Grundsätzlich kann vorgesehen sein, dass das Stellglieds 70, ebenso wie der Ventilstößel 30, axial verstellbar und insbesondere zusammen mit dem Ventilstößel 30 verfahrbar ist. In diesem Fall sind Stellglied 70 und Ventilstößel 30 fest, insbesondere in axialer Richtung, miteinander verbindbar. Das Stellglied 70 ist in der Steuer- und Antriebseinrichtung 40 axial verschiebbar gelagert und drehstarr mit dem letzten Zahnrad der Getriebeeinrichtung 60 verbunden. Vorzugsweise ist jedoch das Stellglied 70 innerhalb der Steuer- und Antriebseinrichtung 40 axial verschiebefest gelagert. Zur Übertragung des Drehmoments auf den Ventilstößel 30 ist die Kupplungseinrichtung 45 derart ausgebildet, dass eine Übertragung des Drehmoments bei unterschiedlichen axialen Abständen zwischen Stellglied 70 und Ventilstößel 30 erfolgen kann.

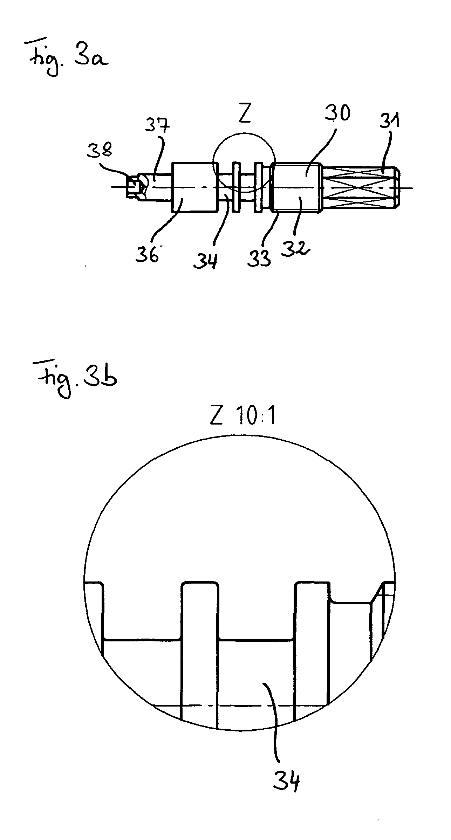

In Fig. 3a ist eine Ausführungsform eines erfindungsgemäßen Ventilstößels 30 dargestellt. Zur Verbindung mit dem Stellglied 70 ist an einem Ende des Ventilstößels 30 ein als Sechskant ausgebildeter Kupplungsabschnitt 31 vorgesehen. Mit diesem kann eine formschlüssige, drehfeste Verbindung mit einem korrespondierenden Innensechskant des Stellglieds 70 hergestellt werden. Durch eine entsprechende Länge der Kupplungsabschnitte von Ventilstößel 30 und Stellglied 70 ist eine Drehmomentübertragung bei unterschiedlichen Abständen von Ventilstößel 30 und Stellglied 70 möglich.

Der Ventilstößel 30 umfasst ferner eine Gewindespindel. Hierzu weist dieser Ventilstößel 30 einen Gewindeabschnitt 32 auf, welcher mit einem Außengewinde 33 versehen ist. Ferner ist an dem Ventilstößel 30 ein Dichtabschnitt 34 vorgesehen, welcher zur Abdichtung gegenüber einem Ventil 15, insbesondere einem Ventileinsatz 20, vorgesehen ist. An dem Dichtabschnitt 34 sind mehrere, in der gezeigten Ausführungsform zwei, ringförmige Nuten ausgebildet, in welche Dichtelemente, insbesondere O-Ring-Dichtungen, einsetzbar sind. Der Ventilstößel 30 weist ferner einen Gleitabschnitt 36 auf, welcher zylinderförmig gestaltet ist und einen mit einem Innendurchmesser des Ventileinsatzes 20 korrespondierenden Außendurchmesser aufweist. Im Anschluss an den Gleitabschnitt 36 ist ein Befestigungsabschnitt 37 für einen Ventilkörper 39 ausgebildet. Der Befestigungsabschnitt 37 weist ein axiales, zentrales Sackloch 38 und einen Bereich mit reduziertem Durchmesser zur Befestigung des Ventilkörpers 39 auf.

Fig. 3b zeigt eine vergrößerte Darstellung des Dichtabschnitts 34 des in Fig. 3a gezeigten Ventilstößels 30.

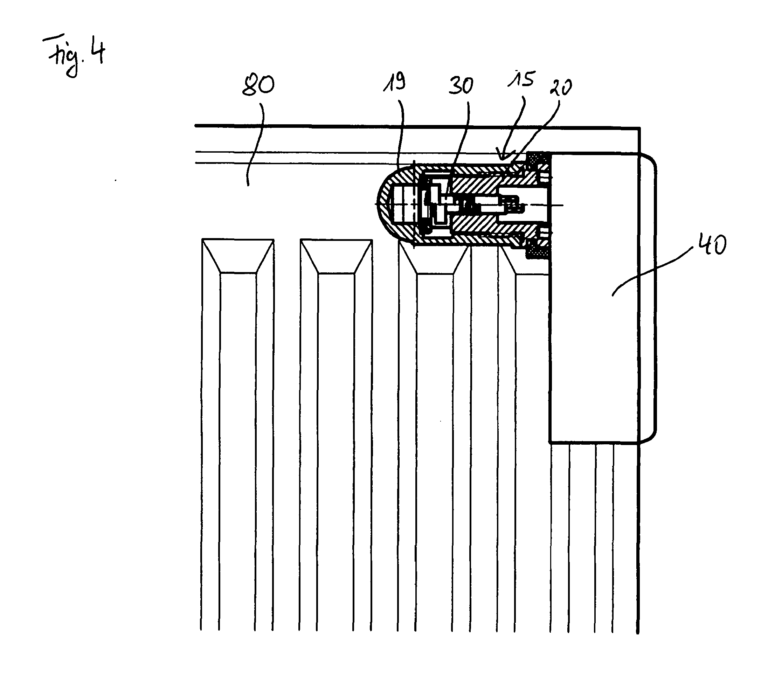

Fig. 4 zeigt eine weitere erfindungsgemäße Vorrichtung 10 zur Steuerung eines Heizkörpers, welche im Wesentlichen der in Fig. 1 gezeigten Vorrichtung 10 entspricht. Die Vorrichtung 10 ist bei der in Fig. 4 dargestellten Anordnung derart an dem als Flachheizkörper mit zwei Heizplatten ausgebildeten Heizkörper 80 angebracht, dass die Steuer- und Antriebseinrichtung 40 im Wesentlichen in die äußeren Abmessungen des Heizkörpers 80 und den Abstand zwischen den beiden Heizplatten integriert ist. Eine Heizplatte des Heizkörpers 80 dient als Vorlauf und ist über ein T-Stück mit dem Ventil 15 an die zweite Heizplatte leitungsmäßig angeschlossen, welche als Rücklauf dient. In der gezeigten Ausführungsform ist die Steuer- und Antriebseinrichtung 40 in eine Seitenverkleidung des Heizkörpers 80 eingelassen. Zur Bedienung der Steuer- und Antriebseinrichtung 40 ist an dieser ein Bedienfeld vorgesehen, welches von außerhalb des Heizkörpers 80 betätigbar ist.

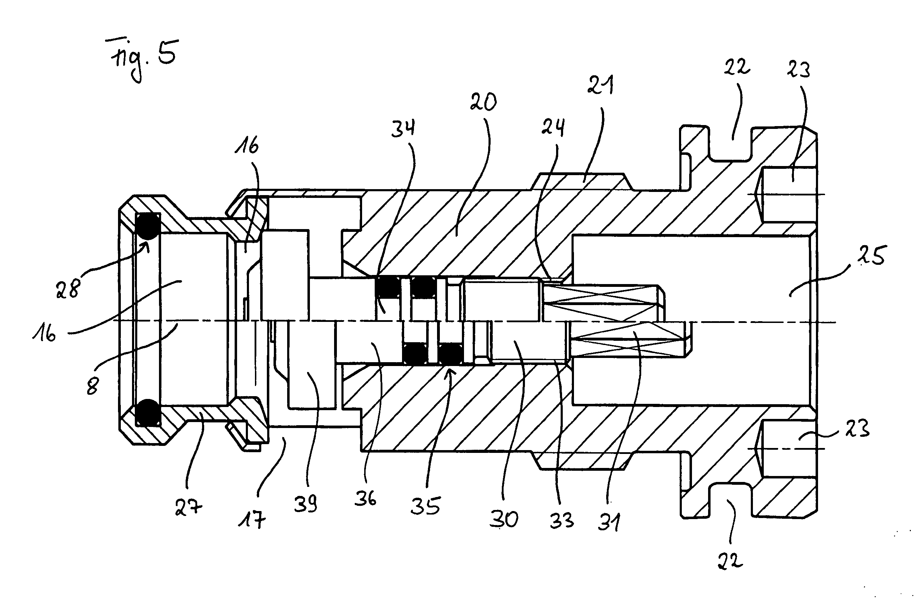

Fig. 5 zeigt eine erste Ausführungsform eines Ventileinsatzes 20. Der Ventileinsatz 20 weist zur Einschraubung in ein Ventilgehäuse 19 an einer äußeren Umfangsfläche ein Außengewinde 21 auf. Die Abmessungen des Ventileinsatzes 20 sind vorzugsweise derart gewählt, dass dieser in Verbindung mit genormten Ventilgehäusen 19 verwendbar ist. Bei einer Nachrüstung eines Heizkörpers 80 muss demnach nicht ein gesamtes Ventil 15, sondern lediglich ein Ventileinsatz 20 ausgetauscht werden. Zur Verbindung mit der Steuer- und Antriebseinrichtung 40 ist an dem Ventileinsatz 20 an einem äußeren Umfang hiervon eine Ringnut 22 ausgebildet, welche mit einem entsprechenden Rastmittel der Steuer- und Antriebseinrichtung 40 in Eingriff gebracht werden kann. Ferner weist der Ventileinsatz 20 an einer ersten Stirnseite mehrere Sacklöcher 23 zur Herstellung einer festen Verbindung mit der Steuer- und Antriebseinrichtung 40 auf.

In dem Ventileinsatz 20 ist ein Ventilstößel 30 mit einem Ventilkörper 39 angeordnet. Der Ventilkörper 39 kann teller-, kegel- oder kugelförmig ausgebildet sein oder eine Kombination dieser Formen aufweisen.

Der Ventilstößel 30 weist die in Verbindung mit Figuren 3a und 3b beschriebene Gestalt auf. An seinem Dichtabschnitt 34 ist er zur Abdichtung gegenüber dem Ventileinsatz 20 mit einem als Doppel-O-Ring-Dichtung ausgebildeten Dichtelement 35 versehen. Das Außengewinde 33 korrespondiert mit einem entsprechenden Innengewinde 24 des Ventileinsatzes 20. Durch Drehung des Ventilstößels 30 erfolgt somit eine axiale Verstellung des Ventilstößels 30 innerhalb des Ventileinsatzes 20.

Der Ventileinsatz 20 weist eine Bohrung auf, in welcher der Ventilstößel 30 aufgenommen ist. In der Bohrung sind ein Gleitbereich, ein Gewindebereich mit dem Innengewinde 24 und ein durchmesserbreiterer Aufnahmeraum 25 gebildet. Der Gleitbereich des Ventileinsatzes 20 bildet mit dem Gleitabschnitt 36 des Ventilstößels 30 eine Gleitpassung. Der Gewindebereich des Ventileinsatzes 20 ist gegenüber dem Gleitbereich geringfügig durchmesserverkleinert. Der Kupplungsabschnitt 31 des Ventilstößels 30 ragt in den Aufnahmeraum 25 hinein.

An einer zweiten Stirnseite des Ventileinsatzes 20 ist ein als separates Teil ausgebildeter Ventilsitz 27 angeordnet, welcher mit dem Ventileinsatz 20 fest verbindbar ist. Der Ventilsitz 27 weist eine konische Ventilsitzfläche auf, welche zum Verschließen des Ventils 15 von dem Ventilkörper 39 des Ventilstößels 30 im Wesentlichen dichtend kontaktiert werden kann. Der Ventilsitz 27 weist ferner eine ringförmigen Nut auf, welche an einer inneren Umfangsfläche des Ventilsitzes 27 angeordnet ist. Zur Abdichtung gegenüber einem Abschnitt eines Ventilgehäuses 19 ist in der Nut eine ringförmige Dichtung 28 angeordnet.

Oberhalb der Längsachse 8 des Ventileinsatzes 20 ist der Ventilstößel 30 in einer Schließposition gezeigt, in welcher der Ventilkörper 39 an der konisch geformten Ventilsitzfläche des Ventilsitzes 27 anliegt und somit das Ventil 19 schließt. Unterhalb der Längsachse 8 befindet sich der Ventilstößel 30 in einer Öffnungsposition, in welcher eine Ventilöffnung freigegeben ist.

Der Ventileinsatz 20 weist einen Einlass 16 und einen Auslass 17 auf. Der Einlass 16 ist an der zweiten Stirnseite und der Auslass 17 an einer äußeren Umfangsfläche des Ventileinsatzes 20 gebildet.

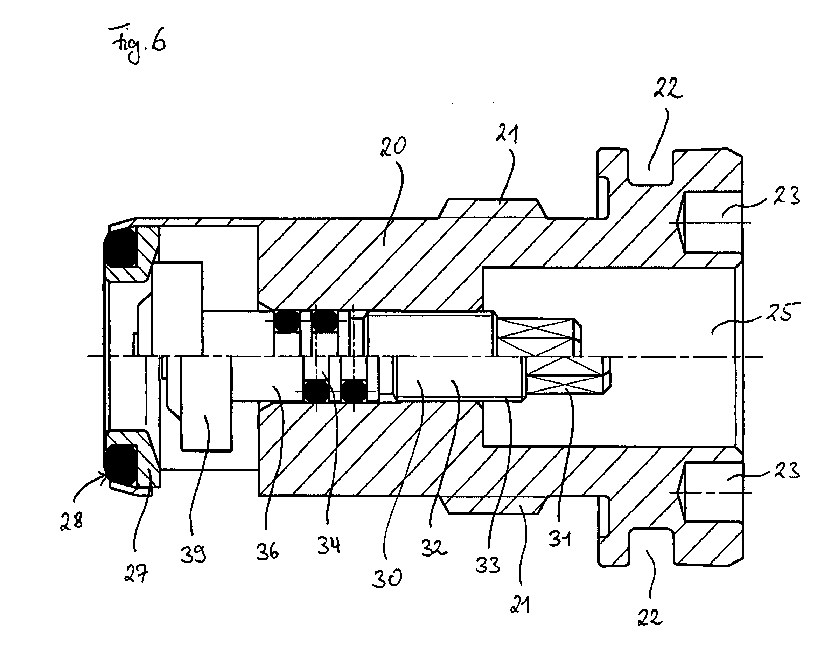

Fig. 6 zeigt eine zweite Ausführungsform eines erfindungsgemäßen Ventileinsatzes 20. Der Unterschied zu dem in Fig. 5 gezeigten Ventileinsatz 20 besteht darin, dass die ringförmige Dichtung 28 an einer Stirnfläche des Ventileinsatzes 20, insbesondere des Ventilsitzes 27, angeordnet ist. Diese Dichtung 28 dient ebenfalls einer dichtenden Verbindung mit dem Ventilgehäuse 19.

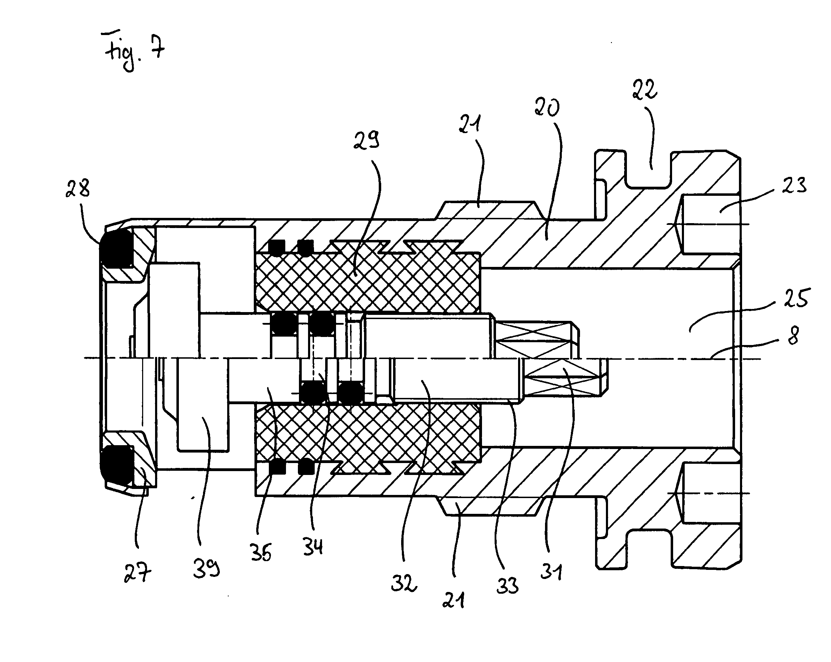

Fig. 7 zeigt eine weitere Ausführungsform eines Ventileinsatzes 20. Im Unterschied zu dem in Fig. 6 gezeigten Ventileinsatz 20 weist dieser Ventileinsatz 20 aus Metall einen Kunststoffeinsatz 29 auf, welcher in dem Ventileinsatz 20 mittels Schwalbenschwanzverbindungen befestigt und über zwei Dichtringe abgedichtet ist. Ein Innengewinde 24 ist an einer inneren Umfangsfläche des hülsenförmig geformten Kunststoffeinsatzes 29 vorgesehen und korrespondiert, wie auch in den weiteren Ausführungsformen, mit dem Außengewinde 33 des Ventilstößels 30. Der Kunststoffeinsatz, welcher auch als Kunststoffgewindebuchse bezeichnet werden kann, dient der Reduzierung der Reibung bei der Drehung des Ventilstößels 30.

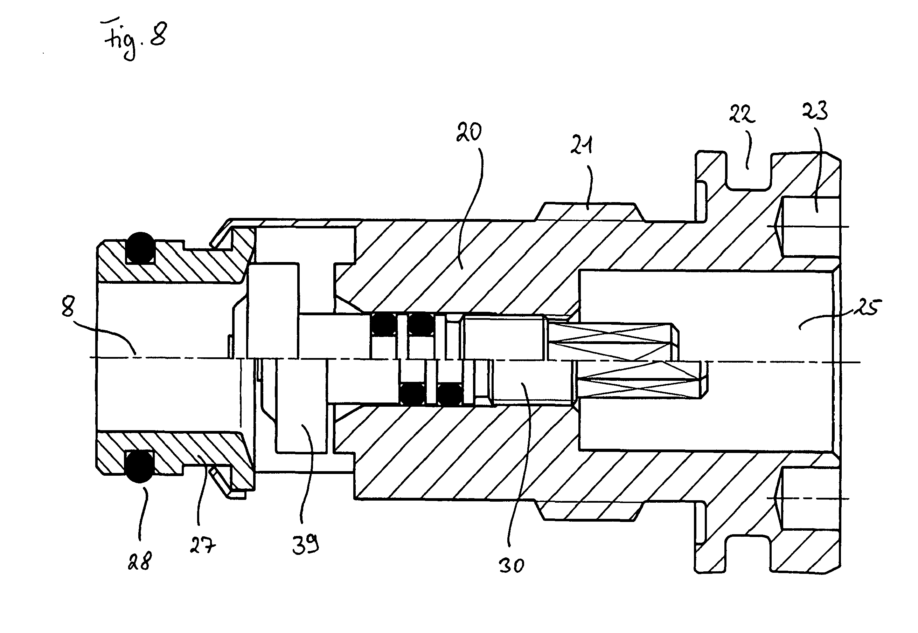

Eine weitere Ausführungsform eines Ventileinsatzes 20 ist in Fig. 8 dargestellt. Dieser Ventileinsatz 20 weist ebenfalls einen Ventilsitz 27 auf, welcher durch den Ventilkörper 39 des Ventilstößels 30 verschließbar ist. Zur abdichtenden Verbindung mit dem Ventilgehäuse 19 ist die ringförmige Nut mit der ringförmigen Dichtung 28 außen an dem Ventileinsatz 20, insbesondere an einer Außenumfangsfläche des Ventilsitzes 27, angeordnet.

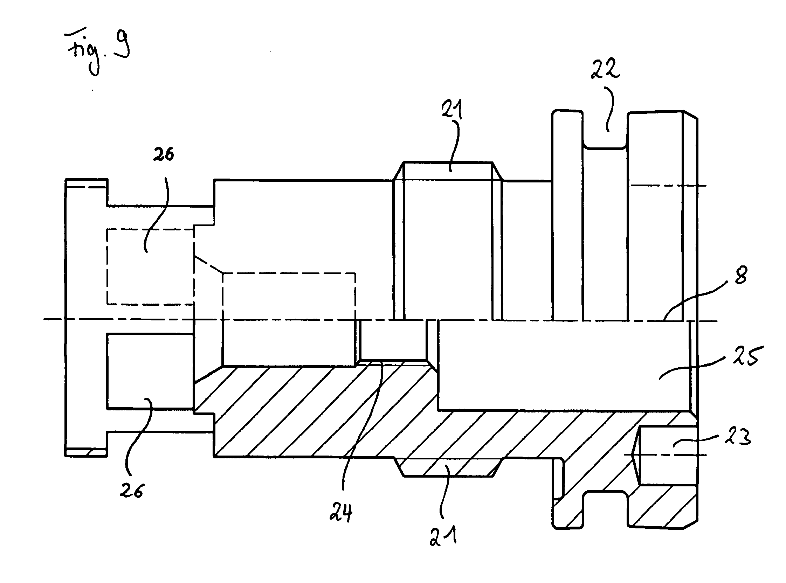

Fig. 9 zeigt eine Ausführungsform eines Ventileinsatzes 20 mit mehreren fensterartigen Öffnungen 26 im Bereich des Ventilsitzes zur gleichmäßigeren Wasserverteilung, welche zu einer geringeren Geräuschentwicklung beiträgt. Der Ventileinsatz 20 ist in dieser Darstellung ohne Ventilstößel 30 gezeigt, wodurch das Innengewinde 24 besonders deutlich erkennbar ist. Oberhalb der Längsachse 8 ist eine Aufsicht auf den Ventileinsatz 20 gezeigt, während unterhalb der Längsachse 8 eine Schnittansicht dargestellt ist.

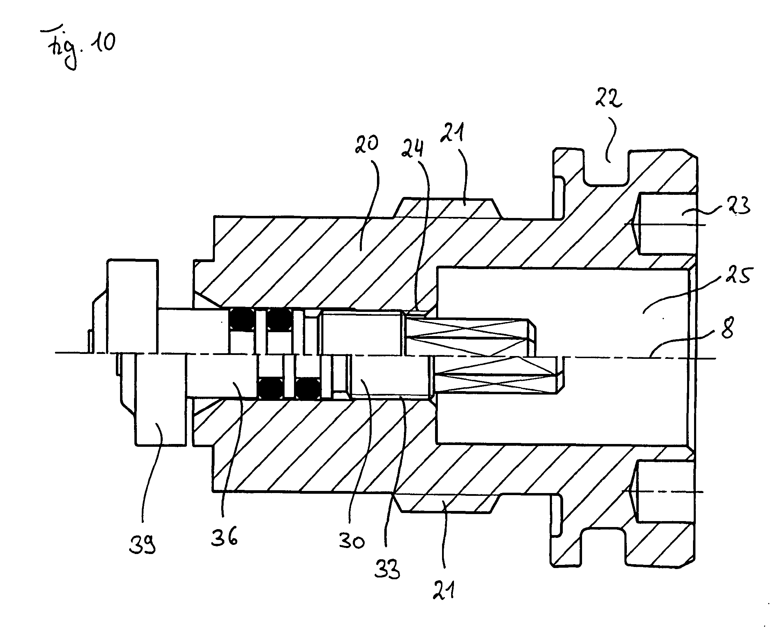

Fig. 10 zeigt eine Ausführungsform eines Ventileinsatzes 20 ohne Ventilsitz. Dieser Ventileinsatz 20 dient zur Verwendung mit einem Ventilgehäuse 19, welches einen integrierten Ventilsitz besitzt. Ein solcher integrierter Ventilsitz kann beispielsweise aus Magnesium oder Kunststoff gebildet sein.

Das Ventil 15 kann aus Metall, insbesondere Messing oder Stahl und als Guss-, Schmiede-, Kaltumform-, Schweiß- oder Drehteil hergestellt sein.

## Patentansprüche

1. Vorrichtung zur Steuerung eines Heiz- oder Kühlkörpers (80) mit
- einem Ventil (15), welches einen axial verstellbaren Ventilstößel (30) zum Öffnen und/oder Schließen des Ventils (15) aufweist,
- einer Steuer- und Antriebseinrichtung (40), welche einen Elektromotor (50) mit einer Antriebswelle (51) zum axialen Verstellen des Ventilstößels (30) und eine Regeleinrichtung mit einem Temperatursensor zur Regelung der Temperatur in einem regulären Heiz- oder Kühlbetrieb aufweist, welche zum axialen Verstellen des Ventilstößels (30) mit dem Elektromotor (50) wirkmäßig verbunden ist,
- wobei der Ventilstößel (30) eine Gewindespindel umfasst, welche axial verstellbar in dem Ventil (15) gelagert und von dem Elektromotor (50) drehend antreibbar ist,
**dadurch gekennzeichnet,**
**dass** die Steuer- und Antriebseinrichtung (40) über eine Programmierung ausgebildet ist, in vorgegebenen Zeitabständen einen Spüldurchgang des Ventils (15) durchzuführen, wobei das Ventil (15) mittels des Elektromotors (50) für eine vorbestimmte Zeit in einen weit geöffneten Zustand gebracht und anschließend zum Zurückkehren in den regulären Heiz- oder Kühlbetrieb zu einem vorbestimmten Öffnungsgrad hin geschlossen wird.

2. Vorrichtung nach Anspruch 1,
**dadurch gekennzeichnet,**
**dass** eine Getriebeeinrichtung (60) und ein Stellglied (70), welches mit dem Ventilstößel (30) drehfest verbindbar ist, vorgesehen sind.

3. Vorrichtung nach Anspruch 2,
**dadurch gekennzeichnet,**
**dass** das Stellglied (70) axial verschiebefest in der Steuer- und Antriebseinrichtung (40) gelagert ist und
**dass** eine Kupplungseinrichtung (45) zum drehfesten Koppeln des Ventilstößels (30) und des Stellglieds (70) angeordnet ist.

4. Vorrichtung nach einem der Ansprüche 2 oder 3,
**dadurch gekennzeichnet,**
**dass** eine Längsachse (72) des Stellglieds (70) und/oder des Ventilstößels (30) einen Winkelversatz gegenüber einer Längsachse (52) der Antriebswelle (51) aufweist.

5. Vorrichtung nach Anspruch 4,
**dadurch gekennzeichnet,**
**dass** der Winkelversatz etwa 90° beträgt.

6. Vorrichtung nach einem der Ansprüche 2 bis 5,
**dadurch gekennzeichnet,**
**dass** die Getriebeeinrichtung (60) ein Zahnradgetriebe mit mehreren Getriebestufen und/oder mindestens eine Kegelradgetriebestufe und/oder mindestens eine Stirnradgetriebestufe aufweist.

7. Vorrichtung nach einem der Ansprüche 1 bis 6,
**dadurch gekennzeichnet,**
**dass** in der Steuer- und Antriebseinrichtung (40) ein Energiespeicher zum Betreiben des Elektromotors (50) angeordnet ist.

8. Vorrichtung nach einem der Ansprüche 1 bis 7,
**dadurch gekennzeichnet,**
**dass** der Temperatursensor beabstandet von der Steuer- und Antriebseinrichtung (40) angeordnet und drahtlos mit der Steuer- und Antriebseinrichtung (40) verbunden ist.

9. Vorrichtung nach einem der Ansprüche 1 bis 8,
**dadurch gekennzeichnet,**
**dass** das Ventil (15) zum Befestigen der Steuer- und Antriebseinrichtung (40) mindestens ein Sackloch (23) aufweist, welches parallel zu einer Axialrichtung des Ventilstößels (30) ausgerichtet ist.

10. Vorrichtung nach einem der Ansprüche 1 bis 9,
**dadurch gekennzeichnet,**
**dass** ein Nenndurchmesser und/oder ein Nennöffnungsgrad des Ventils (15) ferngesteuert einstellbar ist.

11. Vorrichtung nach einem der Ansprüche 1 bis 10,
**dadurch gekennzeichnet,**
**dass** eine Ventilöffnungsgeschwindigkeit einstellbar ist.

12. Heizkörper,
**dadurch gekennzeichnet,**
**dass** eine Vorrichtung (10) nach einem der Ansprüche 1 bis 11 angeordnet ist.

13. Heizkörper nach Anspruch 12,
**dadurch gekennzeichnet,**
**dass** die Vorrichtung (10) zumindest teilweise in eine äußere Begrenzung des Heizkörpers (80) integriert ist.

## Claims

1. Device for controlling a heating or cooling unit (80) comprising
- a valve (15) which has an axially adjustable valve lifter (30) for opening and/or closing the valve (15),
- a control and drive means (40) which has an electric motor (50) with a drive shaft (51) for axial adjustment of the valve lifter (30) and a regulating means with a temperature sensor for regulating the temperature during regular heating or cooling operation, which is operatively connected to the electric motor (50) for axial adjustment of the valve lifter (30),
- wherein the valve lifter (30) comprises a threaded spindle which is supported in an axially adjustable manner in the valve (15) and can be driven in a rotating manner by the electric motor (50),
**characterized in that**
by way of programming the control and drive means (40) is designed to carry out a flushing cycle of the valve (15) at predetermined intervals, wherein the valve (15) is brought into a wide-open condition by the electric motor (50) for a predefined period of time and is subsequently closed to a predefined degree of opening in order to return to the regular heating or cooling operation.

2. Device according to claim 1,
**characterized in that**
a gear means (60) and a positioning member (70), which can be connected in a rotationally fixed manner to the valve lifter (30), are provided.

3. Device according to claim 2,
**characterized in that**
the positioning member (70) is supported in an axially non-displaceable manner in the control and drive means (40) and
**in that** a coupling means (45) is arranged for coupling the valve lifter (30) and the positioning member (70) in a rotationally fixed manner.

4. Device according to any one of claims 2 or 3,
**characterized in that**
a longitudinal axis (72) of the positioning member (70) and/or the valve lifter (30) has an angular offset with respect to a longitudinal axis (52) of the drive shaft (51).

5. Device according to claim 4,
**characterized in that**
the angular offset amounts to approximately 90°.

6. Device according to any one of claims 2 to 5,
**characterized in that**
the gear means (60) has a pinion gear with several gear stages and/or at least one bevel gear stage and/or at least one spur gear stage.

7. Device according to any one of claims 1 to 6,
**characterized in that**
in the control und drive means (40) an energy store for operating the electric motor (50) is arranged.

8. Device according to any one of claims 1 to 7,
**characterized in that**
the temperature sensor is arranged in a spaced manner from the control and drive means (40) and is wirelessly connected to the control and drive means (40).

9. Device according to any one of claims 1 to 8,
**characterized in that**
to fasten the control and drive means (40) the valve (15) has at least one blind hole (23) which is aligned parallel to an axial direction of the valve lifter (30).

10. Device according to any one of claims 1 to 9,
**characterized in that**
a nominal diameter and/or a nominal degree of opening of the valve (15) can be set in a remote-controlled manner.

11. Device according to any one of claims 1 to 10,
**characterized in that**
a valve opening speed can be set.

12. Heating unit,
**characterized in that**
a device (10) according to any one of claims 1 to 11 is arranged.

13. Heating unit according to claim 12,
**characterized in that**
the device (10) is integrated at least partially into an outer boundary of the heating unit (80).

## Revendications

1. Dispositif de commande d'un organe (80) de chauffage ou de refroidissement, avec
- une vanne (15) qui comprend un coulisseau (30) de vanne mobile axialement pour ouvrir et/ou fermer la vanne (15),
- un dispositif (40) de commande et d'entraînement qui comprend un moteur électrique (50) avec un arbre d'entraînement (51) pour déplacer axialement le coulisseau (30) de vanne et un dispositif de régulation avec un capteur de température pour réguler la température dans un régime normal de chauffage ou de refroidissement, qui est relié de façon active au moteur électrique (50) pour déplacer axialement le coulisseau (30) de vanne,
- dans lequel le coulisseau (30) de vanne comprend une broche filetée qui est montée mobile axialement dans la vanne (15) et peut être entraînée en rotation par le moteur électrique (50),
***caractérisé en* ce *que*** le dispositif (40) de commande et d'entraînement est conformé, par le biais d'une programmation, pour effectuer à intervalles prédéterminés une opération de rinçage de la vanne (15), la vanne (15) étant placée dans un état grand ouvert par le moteur électrique (50) pendant une durée prédéterminée, puis fermée jusqu'à un niveau d'ouverture prédéterminé pour revenir au régime normal de chauffage ou refroidissement.

2. Dispositif selon la revendication 1, ***caractérisé en ce* qu'**il est prévu un dispositif de transmission (60) et un organe de manoeuvre (70) qui peut être relié fixement en rotation au coulisseau (30) de vanne.

3. Dispositif selon la revendication 2,
***caractérisé***
***en ce* que** l'organe de réglage (70) est monté de manière immobile axialement dans le dispositif (40) de commande et d'entraînement, et
***en ce* qu'**un dispositif d'accouplement (45) est prévu pour coupler fixement en rotation le coulisseau (30) de vanne et l'organe de manoeuvre (70).

4. Dispositif selon la revendication 2 ou 3, ***caractérisé en ce* qu'**un axe longitudinal (72) de l'organe de manoeuvre (70) et/ou du coulisseau (30) de vanne présente(nt) un décalage angulaire par rapport à un axe longitudinal (52) de l'arbre d'entraînement (51).

5. Dispositif selon la revendication 4, ***caractérisé en ce que*** le décalage angulaire est d'environ 90°.

6. Dispositif selon l'une quelconque des revendications 2 à 5, ***caractérisé en ce que*** le dispositif de transmission (60) comprend une transmission à engrenages avec plusieurs étages de transmission et/ou au moins un étage de transmission à engrenage conique et/ou au moins un étage de transmission à engrenage frontal.

7. Dispositif selon l'une quelconque des revendications 1 à 6, ***caractérisé en ce* que** dans le dispositif (40) de commande et d'entraînement est placé un accumulateur d'énergie pour alimenter le moteur électrique (50).

8. Dispositif selon l'une quelconque des revendications 1 à 7, ***caractérisé en ce que*** le capteur de température est placé à distance du dispositif (40) de commande et d'entraînement et est relié sans fil au dispositif (40) de commande et d'entraînement.

9. Dispositif selon l'une quelconque des revendications 1 à 8, ***caractérisé en ce que*** la vanne (15) comprend, pour la fixation du dispositif (40) de commande et d'entraînement, au moins un trou borgne (23) qui est orienté parallèlement à une direction axiale du coulisseau (30) de vanne.

10. Dispositif selon l'une quelconque des revendications 1 à 9, ***caractérisé en ce* qu'**un diamètre nominal et/ou un degré d'ouverture nominal de la vanne (15) peut être réglé à distance.

11. Dispositif selon l'une quelconque des revendications 1 à 10, ***caractérisé en ce* qu'**une vitesse d'ouverture de la vanne peut être réglée.

12. Radiateur, ***caractérisé en ce qu'**un* dispositif (10) selon l'une quelconque des revendications 1 à 11 est prévu.

13. Radiateur selon la revendication 12, ***caractérisé en ce que*** le dispositif (10) est intégré au moins partiellement dans une délimitation extérieure du radiateur (80).
